# EUROPEAN PATENT APPLICATION

(11) **EP 4 557 694 A1**
(43) Date of publication of application: **21.05.2025**
(21) Application number: 23838440.8
(22) Date of filing: 17.03.2023
(51) Int. Cl.: H04L 47/24

(54) **MESSAGE PROCESSING METHOD, AND DEVICE AND STORAGE MEDIUM**

(30) Priority: 15.07.2022 CN 202210831214
(71) Applicant: ZTE Corporation, Shenzhen, Guangdong 518057 (CN)
(72) Inventor: GAO, Chenqiang, Shenzhen, Guangdong 518057 (CN); YU, Jinghai, Shenzhen, Guangdong 518057 (CN)
(74) Representative: Cristinelli, Luca
(86) International application number: PCT/CN2023/082229
(87) International publication number: WO 2024/011938

(57) **Abstract**

The present disclosure relates to the technical field of communications, and provides a message processing method, a network device, and a computer-readable storage medium. The method includes: encapsulating, by a network forwarding node, a received message to obtain an encapsulated message, wherein the encapsulated message includes current-node stay time information and current-node entry and exit timestamp information.

## Description

### Cross-Reference to Related Application

The present disclosure claims priority to Chinese Patent Application No. 202210831214.8, filed on July 15, 2022, which is incorporated by reference in its entirety.

### Technical Field

The present disclosure relates to the technical field of communications, and in particular, to a message processing method, a device, and a storage medium.

### Background

In time sensitive networking (TSN), to ensure an end-to-end latency for deterministic traffic flows, IEEE 802.1Qbv defines a scheduling mechanism of a time awareness shaper (TAS). The scheduling mechanism dynamically provides on/off control for exit queues based on a preset periodic gate control list. Each node along a path calculates a gate control time, and through the opening and closing of a gate, data packets in deterministic queues are scheduled, thereby forwarding deterministic data flows at a preset gate-opening time.

In the related art, by calculating a link latency and a processing latency of the data packets from a source device to a destination device, a fixed stay time for each node in a link is determined, thereby achieving deterministic forwarding of the traffic flows in the time sensitive networking based on the stay time.

However, scheduling and forwarding methods based on the fixed stay time can result in the inaccurate end-to-end latency.

### Summary

Embodiments of the present disclosure provide a message processing method, a network device, a computer-readable storage medium, and a computer program product, which may provide a deterministic end-to-end latency in time sensitive networking.

In a first aspect, an embodiment of the present disclosure provides a message processing method, applied to a network forwarding node, including:
encapsulating a received message to obtain an encapsulated message, where the encapsulated message includes current-node stay time information and current-node entry and exit timestamp information.

In a second aspect, an embodiment of the present disclosure provides a message processing method, applied to a network control node, including:
determining a forwarding path of a message;
determining latency information of the message according to the forwarding path; and
distributing the latency information to a network forwarding node on the forwarding path, such that the network forwarding node encapsulates the received message according to the latency information to obtain an encapsulated message, where the encapsulated message includes current-node stay time information and current-node entry and exit timestamp information.

In a third aspect, an embodiment of the present disclosure provides a network device, including:
a processor and a memory, where
the memory has program instructions stored therein, and the program instructions, when executed by the processor, cause the processor to perform the method described in the first aspect or the second aspect as above.

In a fourth aspect, an embodiment of the present disclosure provides a computer-readable storage medium, having program instructions stored therein, and the program instructions, when executed by a computer, implement the method described in the first aspect or the second aspect as above.

In a fifth aspect, an embodiment of the present disclosure provides a computer program product, having program instructions stored therein, and the program instructions, when running on a computer, cause the computer to perform the method described in the first aspect or the second aspect as above.

According to the solutions of the embodiments of the present disclosure, when encapsulating the message, the network forwarding node adds the current-node stay time information and the current-node entry and exit timestamp information to the message, thereby carrying the current-node stay time information and the current-node entry and exit timestamp information to a downstream network forwarding node through the message, such that the downstream network forwarding node dynamically adjusts the stay time information based on previous-hop stay time information and entry and exit timestamp information, and achieves message scheduling and forwarding based on the adjusted stay time information, so as to provide the deterministic end-to-end latency in the time sensitive networking.

### Brief Description of the Drawings

Fig. 1 is a schematic diagram of a structure of a network link according to an embodiment of the present disclosure;
Fig. 2 is a schematic flowchart of a message processing method according to an embodiment of the present disclosure;
Fig. 3 is a schematic diagram of a structure of a network link according to another embodiment of the present disclosure;
Fig. 4 is a schematic diagram of an encapsulation format of an SR-MPLS data packet according to an embodiment of the present disclosure;
Fig. 5A is a schematic diagram of an encapsulation format of an SRv6 data packet according to an embodiment of the present disclosure;
Fig. 5B is a schematic diagram of an encapsulation format of an SRv6 data packet according to another embodiment of the present disclosure;
Fig. 6 is a schematic diagram of an encapsulation format of an SR-MPLS data packet according to another embodiment of the present disclosure;
Fig. 7A is a schematic diagram of an encapsulation format of an SRv6 data packet according to an embodiment of the present disclosure;
Fig. 7B is a schematic diagram of an encapsulation format of an SRv6 data packet according to another embodiment of the present disclosure;
Fig. 8 is a schematic flowchart of a message processing method according to another embodiment of the present disclosure;
Fig. 9A is a schematic diagram of an encapsulation format of an SRv6 data packet according to another embodiment of the present disclosure;
Fig. 9B is a schematic diagram of an encapsulation format of an SR-MPLS data packet according to another embodiment of the present disclosure;
Fig. 10A is a schematic diagram of an encapsulation format of an SR-MPLS data packet according to another embodiment of the present disclosure;
Fig. 10B is a schematic diagram of an encapsulation format of an SR-MPLS data packet according to another embodiment of the present disclosure;
Fig. 10C is a schematic diagram of an encapsulation format of an SR-MPLS data packet according to another embodiment of the present disclosure;
Fig. 11A is a schematic diagram of an encapsulation format of an SRv6 data packet according to another embodiment of the present disclosure;
Fig. 11B is a schematic diagram of an encapsulation format of an SRv6 data packet according to another embodiment of the present disclosure;
Fig. 12A is a schematic diagram of an encapsulation format of an SRv6 data packet according to another embodiment of the present disclosure;
Fig. 12B is a schematic diagram of an encapsulation format of an SRv6 data packet according to another embodiment of the present disclosure;
Fig. 12C is a schematic diagram of an encapsulation format of an SRv6 data packet according to another embodiment of the present disclosure;
Fig. 12D is a schematic diagram of an encapsulation format of an SRv6 data packet according to another embodiment of the present disclosure;
Fig. 13A is a schematic diagram of an encapsulation format of an SR-MPLS data packet according to another embodiment of the present disclosure;
Fig. 13B is a schematic diagram of an encapsulation format of an SR-MPLS data packet according to another embodiment of the present disclosure;
Fig. 14A is a schematic diagram of an encapsulation format of an SR-MPLS data packet according to another embodiment of the present disclosure;
Fig. 14B is a schematic diagram of an encapsulation format of an SR-MPLS data packet according to another embodiment of the present disclosure;

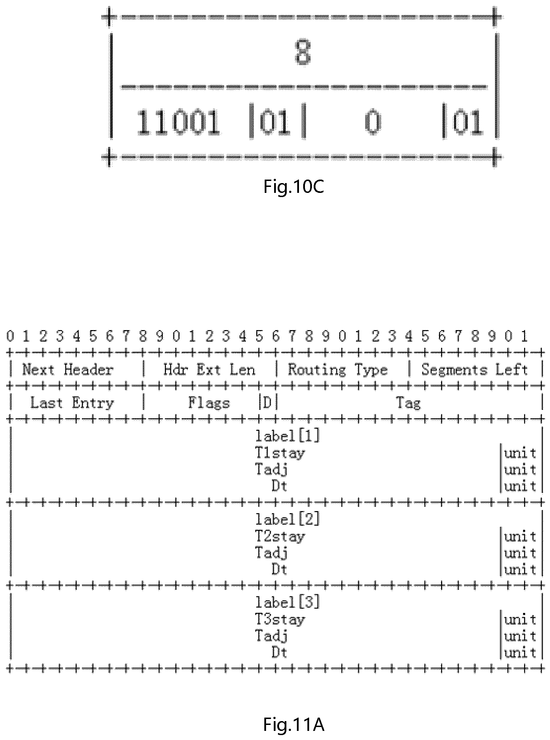

Fig. 10C is a schematic diagram of an encapsulation format of an SR-MPLS data packet according to another embodiment of the present disclosure;

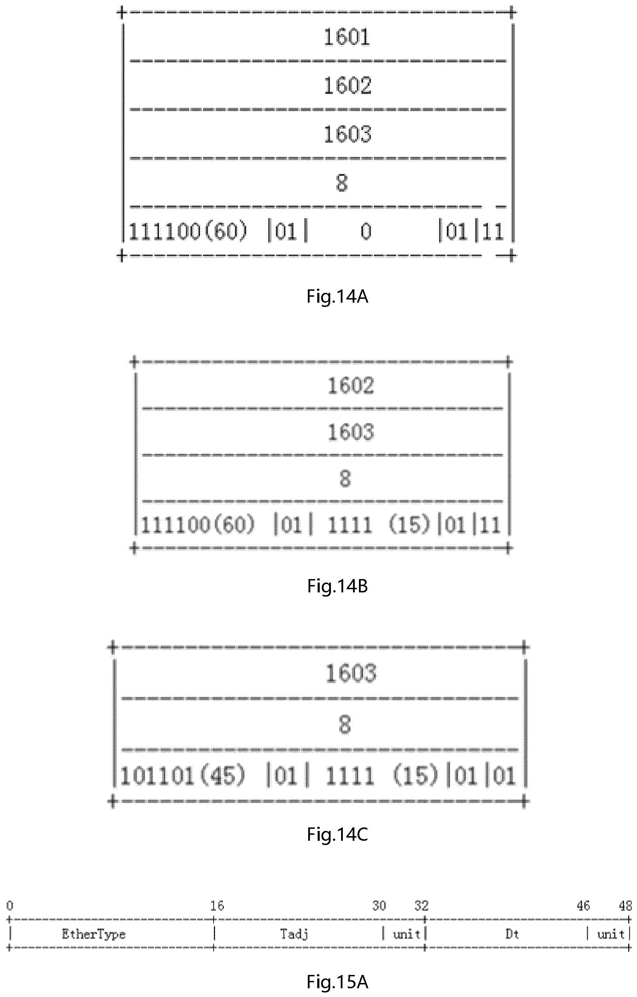

Fig. 15A is a schematic diagram of an encapsulation format of a D-TAG data packet according to an embodiment of the present disclosure;

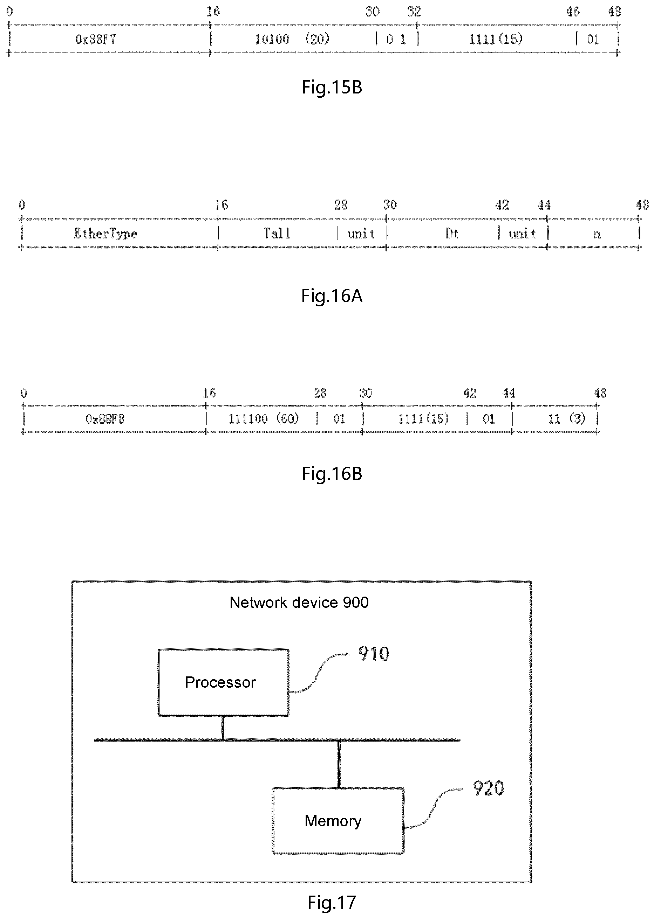

Fig. 15B is a schematic diagram of an encapsulation format of a D-TAG data packet according to another embodiment of the present disclosure;
Fig. 16A is a schematic diagram of an encapsulation format of a D-TAG data packet according to another embodiment of the present disclosure;
Fig. 16B is a schematic diagram of an encapsulation format of a D-TAG data packet according to another embodiment of the present disclosure; and
Fig. 17 is a schematic diagram of a structure of a network device according to an embodiment of the present disclosure.

### Detailed Description of the Embodiments

In order to provide a clearer understanding of the objectives, technical solutions, and advantages of the present disclosure, the present disclosure is further described in detail in conjunction with accompanying drawings and embodiments below. It should be understood that the specific embodiments described herein are merely used for explaining the present disclosure rather than limiting the present disclosure.

It should be understood that in the description of the embodiments of the present disclosure, if "first", "second", etc. are described, they are used only for the purpose of distinguishing between technical features and should not be understood as indicating or implying relative importance or implicitly specifying the number of technical features indicated or a sequence of the indicated technical features."At least one" refers to one or more, and "a plurality of" refers to two or more."And/or" describes an association relationship between associated objects, indicating that three relationships may exist. For example, A and/or B may represent the situations: A exists alone, both A and B exist, and B exists alone. A and B may be singular or plural. The character "/" generally indicates an "or" relationship between the preceding and succeeding associated objects. "At least one of the following items" and similar expressions refer to any combination of these items, including any combination of single or plural items. For example, at least one of a, b, and c may represent: a, b, c, a and b, a and c, b and c, or a, b, and c, where a, b, and c may be single or multiple.

In addition, technical features involved in the embodiments of the present disclosure described below can be implemented as long as they do not conflict with each other. In time sensitive networking (TSN), to ensure end-to-end latency for deterministic traffic flows, IEEE 802.1Qbv defines a scheduling mechanism of a time awareness shaper (TAS). The scheduling mechanism dynamically provides on/off control for exit queues based on a preset periodic gate control list. Each node along a path calculates a gate control time, and through the opening and closing of a gate, data packets in deterministic queues are scheduled, thereby forwarding deterministic data flows at a preset gate-opening time.

In the related art, by calculating link latency and processing latency of the data packets from a source device to a destination device, a fixed stay time for each node in a link is determined, thereby achieving deterministic forwarding of the traffic flows in the time sensitive networking based on the stay time.

However, scheduling and forwarding methods based on the fixed stay time can result in inaccurate end-to-end latency.

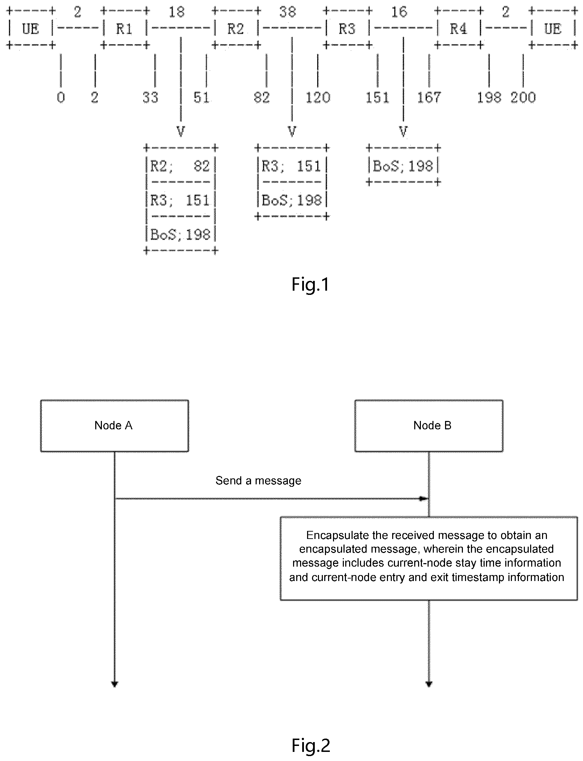

Exemplarily, deterministic forwarding in the time sensitive networking is implemented in conjunction with a path distribution function of segment routing (SR) and the queue scheduling mechanism of the TNS. Referring to Fig. 1, Fig. 1 is a schematic diagram of a structure of a network link according to an embodiment of the present disclosure. As shown in Fig. 1, in the figure, UE represents user equipment, with the left UE being source user equipment (a transmitting end) and the right UE being destination user equipment (a receiving end). A time sensitive flow sent by the source user equipment requires the destination user equipment for reception within 200 µs.A data packet arrives at a router R1 (an entry router) from the UE with a latency of 2 µs through a wireless link. Then, the data packet is transmitted over an optical fiber to a router R2 with a link latency of 18 µs, followed by a link latency of 38 µs to reach a router R3, and then reaches a router R4 (an exit router) after a link latency of 16 µs. Finally, the data packet reaches the destination user equipment with a wireless link latency of 2 µs, where a processing latency at each router is 6 µs. Therefore, a total latency of the data packet from source to destination = link latency + processing latency = (2+18+38+16+2) + (6*4) = 100 µs. A total expected latency is 200 µs, leaving an idle time of 100 µs, which averages out to 25 µs for each of the four routers, and in other words, the allowed stay time for each router is 25 µs. Therefore, the arrival time of the data packet at the first router R1 is 2 µs, and a local deadline (latest forwarding time) = arrival time + equipment processing latency + allowed stay time = 2 + 6 = 25 = 33 µs. Similarly, the arrival and transmission times for the other **routers in** the worst case are: the router R2: 51 and 82; the router R3: 120 and 151; and the router R4: 167 and 198. The arrival time at the destination user equipment in the worst case is 200.

Based on these worst-case times and with reference to the time when the data packet leaves the source user equipment, the entry router may construct a deadline offset vector (33, 82, 151, 198). By combining the SR with the deadline offset vector, a unified SR-TSN stack may be formed. As shown in Fig. 1, each label stack includes a next-hop router identifier and a deadline. The entry router R1 inserts the SR-TSN stack containing three entries into the received data packet.

In this example, as shown in Fig. 1, the first entry (a stack top entry) of the SR-TSN stack includes an address of the router R2 and a time when the data packet needs to leave the router R2, i.e., 82 µs. The second entry includes an address of the router R3 and a time when the data packet needs to leave the router R3, i.e., 151 µs. The third entry (a stack bottom entry) includes a special BoS code (e.g., identifier zero).After receiving the data packet, the router R2 pops the top of the SR-TSN stack, leaving an SR-TSN stack with 2 entries. The router R3 receives the data packet from the R2, the stack top indicates that the router R3 forwards the data packet from the router R3 before 151 µs, and then pops the stack top, leaving an SR-TSN stack with only one entry. The router R4 receives the data packet, pops the stack top, and finds the arrival to the stack bottom. Finally, the router R4 forwards the data packet at the local deadline of 198 µs according to a regular rule of the network (e.g., according to an IP address in an IP header).

In an SR-TSN solution, the allocation of the allowed stay time may be even or uneven allocation, but the allocated local deadline cannot be changed and cannot be dynamically adjusted according to equipment queue waiting time, leading to inaccurate end-to-end latency.

In view of this, an embodiment of the present disclosure provides a message processing method, a network device, a computer-readable storage medium, and a computer program product, which may provide a deterministic end-to-end latency in the time sensitive networking.

The embodiment described in the present disclosure may be applied to a communication system, such as at least one of the following systems: a global system for mobile communications (GSM) or any other second-generation cellular communication system, a universal mobile telecommunications system (UMTS, 3G) based on basic wideband code division multiple access (W-CDMA), high-speed packet access (HSPA), long-term evolution (LTE), LTE-advanced, a system based on an IEEE 802.11 specification, a system based on an IEEE 802.15 specification, and/or a fifth-generation (5G) mobile or cellular communication system, as well as a future mobile communication system. However, this embodiment is not limited to the systems given in the above example, and those skilled in the art may apply the solutions to other communication systems with necessary attributes.

Referring to Fig. 2, which is a schematic flowchart of a message processing method according to an embodiment of the present disclosure. The method is applied to a network forwarding node and includes, but is not limited to, the following step S110:
Step S110: Encapsulate a received message to obtain an encapsulated message, where the encapsulated message includes current-node stay time information and current-node entry and exit timestamp information.

It should be noted that a node A and a node B in Fig. 2 may both be network forwarding nodes; or the node A is a user node, and the node B is a network forwarding node.

It should be understood that in a transmission process of the deterministic traffic flows, the network forwarding node encapsulates a received traffic flow message, and adds the current-node stay time information and the current-node entry and exit timestamp information to the message, thereby carrying the current-node stay time information and the current-node entry and exit timestamp information to a downstream network forwarding node through the message, such that the downstream network forwarding node dynamically adjusts the current-node stay time information based on previous-hop stay time information and previous-hop entry and exit timestamp information, and performs scheduling and forwarding based on the adjusted stay time information, so as to provide a deterministic end-to-end latency in the time sensitive networking.

It should be understood that the message includes a guide label, and the encapsulation process includes, but is not limited to, the following steps:
acquiring current-node allowed stay time information;
acquiring previous-hop stay time information from a first time field included in the guide label and previous-hop entry and exit timestamp information from a second time field included in the guide label;
determining current-node stay time information according to the current-node allowed stay time information, the previous-hop stay time information, and the previous-hop entry and exit timestamp information; and
replacing the previous-hop stay time information in the first time field with the current-node stay time information.

It should be understood that the guide label includes the first time field and the second time field, where the first time field carries the previous-hop stay time information, and the second time field carries the previous-hop entry and exit timestamp information. Therefore, the previous-hop stay time information and the previous-hop entry and exit timestamp information are respectively acquired from the first time field and the second time field included in the guide label, the current-node stay time information is determined according to the current-node allowed stay time information, the previous-hop stay time information, and the previous-hop entry and exit timestamp information, the previous-hop stay time information in the first time field is replaced with the current-node stay time information, scheduling and forwarding are performed based on the current-node stay time information, then, the previous-hop entry and exit timestamp information in the second time field is replaced with the current-node entry and exit timestamp information, and finally, the message is forwarded to the downstream network forwarding node.

It should be noted that the current-node stay time information represents a latest forwarding time after dynamic adjustment of the current node, the previous-hop entry and exit timestamp information represents an actual stay time of the message in a previous node, and in other words, the latest forwarding time of the current node is adjusted according to the latest forwarding time after dynamic adjustment of the previous node and the actual stay time of the message in the previous node. Specifically, a difference between the previous-hop stay time and the previous-hop entry and exit timestamp, plus the current-node allowed stay time, equals the latest forwarding time of the current node.

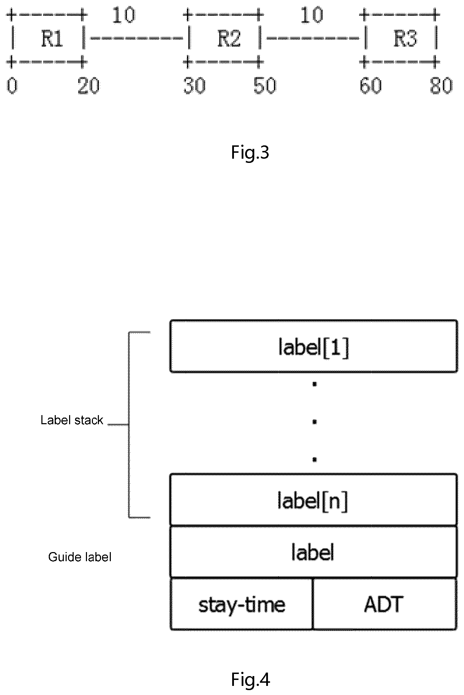

Exemplarily, referring to Fig. 3, which is a schematic diagram of a structure of a network link according to an embodiment of the present disclosure, as shown in Fig. 3, in the figure, routers R1, R2, and R3 are included, with a link latency of 10 µs from the router R1 to the router R2, and a link latency of 10 µs from the router R2 to the router R3. Under the requirements of the time sensitive flow, the allowed stay times *T*₁*_{stay},T*_{2*stay,* and} *T*_{3*stay*} for the three routers are all 20 µs. If a timestamp when the message arrives at the router R1 is 0 µs, the arrival times of the message at the three routers in the worst case are 0 µs, 30 µs, and 60 µs respectively.

Therefore, the router R1, as the entry router for message transmission, encapsulates the stay time information *T*_{*adj*1} (*T*_{*adj*1} = *T*_{1*stay*}=20 µs) in the first time field included in the guide label in the message. After message processing, the message is placed in a scheduling queue with a scheduling time *T*_{*adj*1} = 20 µs corresponding to a forwarding port. After scheduling, the entry and exit timestamp information *D*_{*t*1} (assuming *D*_{*t*1} *=* 15 µs) is encapsulated in the second time field included in the guide label in the message, and finally, the router R1 forwards the message to the router R2.The router R2 acquires the current-node allowed stay time information *T*_{2*stay*} (*T*₂*_{stay} =* 20 µs), acquires the previous-hop stay time information *T*_{*adj*1} and the previous-hop entry and exit timestamp information *D*_{*t*1} from the first time field and the second time field included in the guide label in the message, and determines the current-node stay time information *T*_{*adj*2} according to the current-node allowed stay time information *T*₂*_{stay},* the previous-hop stay time information *T*_{*adj*1}, and the previous-hop entry and exit timestamp information *D*_{*t*1}*.* Specifically, *T*_{*adj*2} *= T*_{2*stay*} + (*T*_{*adj*1} *- D*_{*t*1}) = 25 µs.Then, the router R2 replaces the previous-hop stay time information *T*_{*adj*1} in the first time field in the guide label with the current-node stay time information *T*_{*adj*2}*.* After message processing, the message is placed in a scheduling queue with a scheduling time *T*_{*adj*2} *=* 25 µs corresponding to the forwarding port. After scheduling, the previous-hop entry and exit timestamp information *D*_{*t*1} in the second time field included in the guide label is replaced with the current-node entry and exit timestamp information *D*_{*t*2}*,* and finally, the message is forwarded to the router R3.

It should be understood that the acquiring current-node allowed stay time information includes one of the following:
acquiring the current-node allowed stay time information from a segment label corresponding to the current node in the message;
   or,
popping a stack top label of the message, where the stack top label is a node label, and looking up the current-node allowed stay time information corresponding to the node label in a preset label forwarding table.

It should be understood that the current-node allowed stay time may be carried in the message, or a corresponding node label, a forwarding port, and an allowed stay time may be distributed to each network forwarding node through a network control node, and the label forwarding table is formed in the network forwarding node, such that the network forwarding node may look up the current-node allowed stay time based on the node label in the label forwarding table.

Exemplarily, the preset label forwarding table is shown in Table 1:

**Table 1**

| Node label | Forwarding port | Allowed stay time |
|---|---|---|
| 1601 | interface1 | T1 |
| 1602 | interface2 | T2 |
| 1603 | interface3 | T3 |

Correspondingly, for different message encapsulation formats, such as an encapsulation format of an SR-MPLS data packet, referring to Fig. 4, which is a schematic diagram of an encapsulation format of an SR-MPLS data packet according to an embodiment of the present disclosure, as shown in Fig. 4, the encapsulation format includes a label stack {label[1], label[2], ..., label[n]}, where each label stack label[n] includes a node label of a network forwarding node in a message forwarding path. By popping the stack top label of the message, the node label contained in the stack top label is obtained, and the current-node allowed stay time corresponding to the node label is looked up in the preset label forwarding table.

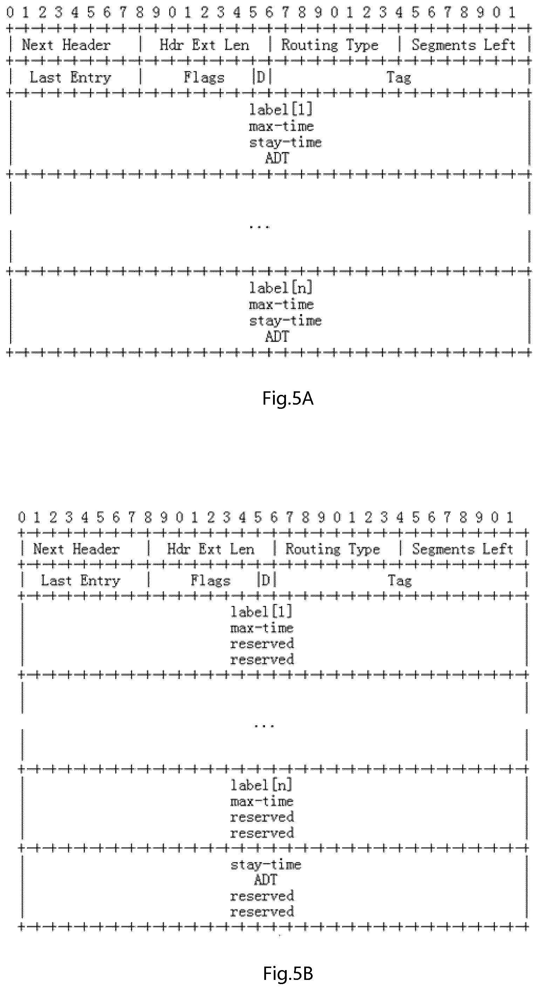

Another example is an encapsulation format of an SRv6 data packet. Referring to Fig. 5A and Fig. 5B, which are schematic diagrams of an encapsulation format of the SRv6 data packet according to an embodiment of the present disclosure, as shown in Fig. 5A and Fig. 5B, an allowed stay time may be added to a segment list of SRv6, where the allowed stay time of each network forwarding node is written into a field max-time of the corresponding segment label label[n]. Therefore, the current-node allowed stay time information may be acquired from the segment label corresponding to the current node in the message.

It should be understood that the message includes a guide label, and the encapsulation process includes, but is not limited to, the following steps:
acquiring previous-hop stay time information from a first time field included in the guide label and previous-hop entry and exit timestamp information from a second time field included in the guide label;
determining the current-node stay time information according to the previous-hop stay time information and the previous-hop entry and exit timestamp information; and
replacing the previous-hop stay time information in the first time field with the current-node stay time information.

It should be understood that the guide label includes the first time field and the second time field, where the first time field carries the previous-hop stay time information, and the second time field carries the previous-hop entry and exit timestamp information. Therefore, the previous-hop stay time information and the previous-hop entry and exit timestamp information are respectively acquired from the first time field and the second time field included in the guide label, the current-node stay time information is determined according to the previous-hop stay time information and the previous-hop entry and exit timestamp information, and then the previous-hop stay time information in the first time field is replaced with the current-node stay time information.

It should be noted that the current-node stay time information represents a total latency time after dynamic adjustment of the current node. The total latency time is the sum of stay times of all nodes in the forwarding path. The previous-hop entry and exit timestamp information represents the actual stay time of the message in the previous node. In other words, the total latency time is adjusted according to the total latency time after dynamic adjustment of the previous node and the actual stay time of the message in the previous node. Specifically, a difference between the previous-hop stay time and the previous-hop entry and exit timestamp is equal to the current-node stay time information, namely the total latency time after dynamic adjustment of the current node.

In a specific embodiment, a message includes a guide label, and encapsulating the received message includes, but is not limited to, the following steps:
acquiring previous hop count information from a hop count field included in the guide label; and
determining current-node actual allowed stay time according to the previous-hop stay time information, the previous-hop entry and exit timestamp information, and the previous hop count information.

It should be noted that the current-node stay time information represents a total latency time after dynamic adjustment of the current node. The total latency time is the sum of stay times of all nodes in the forwarding path. The previous-hop entry and exit timestamp information represents an actual stay time of the message in the previous node. The previous hop count information represents the number of network forwarding nodes that the message needs to pass through to be transmitted to the destination user equipment. The current-node actual allowed stay time is determined according to the total latency time after dynamic adjustment of the previous node, and the actual stay time and the hop count of the message in the previous node. Specifically, the current-node actual allowed stay time is obtained by dividing a difference between the previous-hop stay time and the previous-hop entry and exit timestamp by the hop count. Scheduling and forwarding are performed based on the current-node actual allowed stay time. Subsequently, the previous-hop entry and exit timestamp information in the second time field is replaced with the current-node entry and exit timestamp information, and finally the message is forwarded to the downstream network forwarding node.

Exemplarily, referring to Fig. 3, which is the schematic diagram of the structure of the network link according to this embodiment of the present disclosure, as shown in Fig. 3, in the figure, the routers R1, R2, and R3 are included, with the link latency of 10 µs from the router R1 to the router R2, and the link latency of 10 µs from the router R2 to the router R3. Under the requirements of the time sensitive flow, total latency information *Tₐₗₗ* of the three routers is 60 µs, and hop count information n is 3.

Therefore, before the message reaches the router R1, the previous-hop stay time information in the first time field represents a total latency time *Tₐₗₗ* of 60 µs, the previous-hop entry and exit timestamp information in the second time field is *Dₜ* = 0 µs, and the hop count finformation in the hop count field is n=3. The router R1, as the entry router for message transmission, acquires the previous-hop stay time information *T_{adj}*, the previous-hop entry and exit timestamp information *Dₜ,* and the hop count information n from the first time field, the second time field, and the hop count field included in the guide label in the message. The current-node stay time information *T*_{*all*1} representing the total latency time is determined according to the previous-hop stay time information *Tₐₗₗ* and the previous-hop entry and exit timestamp information *Dₜ.* Specifically,*T*_{*all*1} = *Tₐₗₗ - Dₜ.* The previous-hop stay time information *Tₐₗₗ* in the first time field is replaced with the current-node stay time information *T*_{*all*1}*.* The current-node actual allowed stay time *T_{adj}* is determined according to the previous-hop stay time information*Tₐₗₗ*, the previous-hop entry and exit timestamp information *Dₜ,* and the hop count information n. Specifically, *T_{adj}* = (*Tₐₗₗ - D*_{*t*1})/*n =* 20 µs, and the hop count information *n*₁ = *n* - 1 = 2 in the hop count field is updated. After message processing, the message is placed in a scheduling queue with a scheduling time *T_{adj} =* 20µs corresponding to the forwarding port. After scheduling, the previous-hop entry and exit timestamp information *Dₜ* in the second time field in the guide label is replaced with the current-node entry and exit timestamp information *D*_{*t*1}, and finally, the message is forwarded to the router R2.

It should be understood that the message includes the guide label, and the encapsulation process for the received message includes, but is not limited to, the following steps:
acquiring an entry timestamp and an exit timestamp of the message;
determining the current-node entry and exit timestamp information according to a difference between the exit timestamp and the entry timestamp; and
writing the current-node entry and exit timestamp information into the second time field included in the guide label.

It should be understood that when the network forwarding node receives the message, the entry timestamp is applied at an entry port. After scheduling the message in a deterministic queue, the exit timestamp is applied at an exit port. The current-node entry and exit timestamp information is determined according to the difference between the exit timestamp and the entry timestamp, and the current-node entry and exit timestamp information is written into the second time field included in the guide label in the message.

It should be understood that the message includes the guide label, and the encapsulation process for the received message includes, but is not limited to, the following steps:
determining hop count information of the current node, and writing the hop count information of the current node into the hop count field included in the guide label.

It should be understood that during encapsulating the received message, the previous hop count information is acquired from the hop count field included in the guide label, and hop count information of the current node is determined according to the previous hop count information, and is written into the hop count field included in the guide label.

Exemplarily, if the previous hop count information acquired from the hop count field included in the guide label is n, the hop count information of the current node is *n*₁ *= n* - 1, and then the hop count information *n*₁ of the current node is written into the hop count field included in the guide label.

In a specific embodiment, the guide label further includes a label field, and the label field is used to identify the guide label through a fixed label value.

Exemplarily, refer to Fig. 4, which is the schematic diagram of the encapsulation format of the SR-MPLS data packet according to this embodiment of the present disclosure. As shown in Fig. 4, a guide label of the SR-MPLS data packet is located after the label stack, and the guide label also includes a label field "label" used to represent the guide label through a fixed label value.

In a specific embodiment, the guide label further includes a header label, and the header label is used to identify an Ethernet type of the message through a fixed label value.

It should be understood that the current-node stay time information and the current-node entry and exit timestamp information are encapsulated based on a second-layer Ethernet frame, and the header label used to identify the Ethernet type of the message may be arranged in the guide label, thereby carrying the current-node stay time information and the current-node entry and exit timestamp information through a data frame format.

It should be understood that the message includes a plurality of segment labels, and each segment label corresponds to a network forwarding node on the message forwarding path.

The encapsulation process for the message includes:
acquiring current-node allowed stay time information;
acquiring previous-hop stay time information from a first time field included in a segment label corresponding to the previous node, as well as previous-hop entry and exit timestamp information from a second time field included in the segment label corresponding to the previous node;
determining current-node stay time information according to the current-node allowed stay time information, the previous-hop stay time information, and the previous-hop entry and exit timestamp information; and
writing the current-node stay time information into a first time field included in a segment label corresponding to the current node.

For example, in the encapsulation format of the SRv6 data packet, as shown in Fig. 5A, the Routing Type is set to 4, specifying the SRH format, with the least significant bit D of Flags set to 0. The message includes a plurality of segment labels label[n]. Each segment label corresponds to a network forwarding node on the message forwarding path. Each segment label includes a first time field stay-time and a second time field ADT, where the first time field stay-time carries previous-hop stay time information, and the second time field ADT carries previous-hop entry and exit timestamp information. For another example, as shown in Fig. 5B, the Routing Type is set to 4, specifying the SRH format, with the least significant bit D of Flags set to 1.The message includes a plurality of segment labels label[n]. Each segment label corresponds to a network forwarding node on the message forwarding path. Additionally, an additional independent segment label is further included, and includes a first time field stay-time and a second time field ADT, where the first time field stay-time carries previous-hop stay time information, and the second time field ADT carries previous-hop entry and exit timestamp information. The current-node stay time information is determined according to the current-node allowed stay time information, the previous-hop stay time information, and the previous-hop entry and exit timestamp information, and is written into the first time field stay-time included in the segment label corresponding to the current node.

It should be understood that the acquiring current-node allowed stay time information includes one of the following:
acquiring the current-node allowed stay time information from a third time field included in a segment label corresponding to the current node;
   or,
acquiring a node label corresponding to the current node from a node label field included in a segment label corresponding to the current node, and looking up the current-node allowed stay time information corresponding to the node label of the current node in a preset label forwarding table.

For example, as shown in Fig. 5A and Fig. 5B, each segment label includes a third time field max-time, which carries corresponding allowed stay time information.

For example, each segment label includes a node label field, where the node label field includes a node label of a corresponding network forwarding node. A node label corresponding to the current node is acquired from a node label field included in a segment label corresponding to the current node, and based on the node label, the corresponding current-node allowed stay time information may be looked up in the preset label forwarding table.

It should be understood that the message includes a plurality of segment labels, and each segment label corresponds to a network forwarding node on the message forwarding path.

The encapsulation process for the message includes:
acquiring previous-hop stay time information from a first time field included in a segment label corresponding to the previous node, as well as previous-hop entry and exit timestamp information from a second time field included in the segment label corresponding to the previous node;
determining the current-node stay time information according to the previous-hop stay time information and the previous-hop entry and exit timestamp information; and
writing the current-node stay time information into a first time field included in a segment label corresponding to the current node.

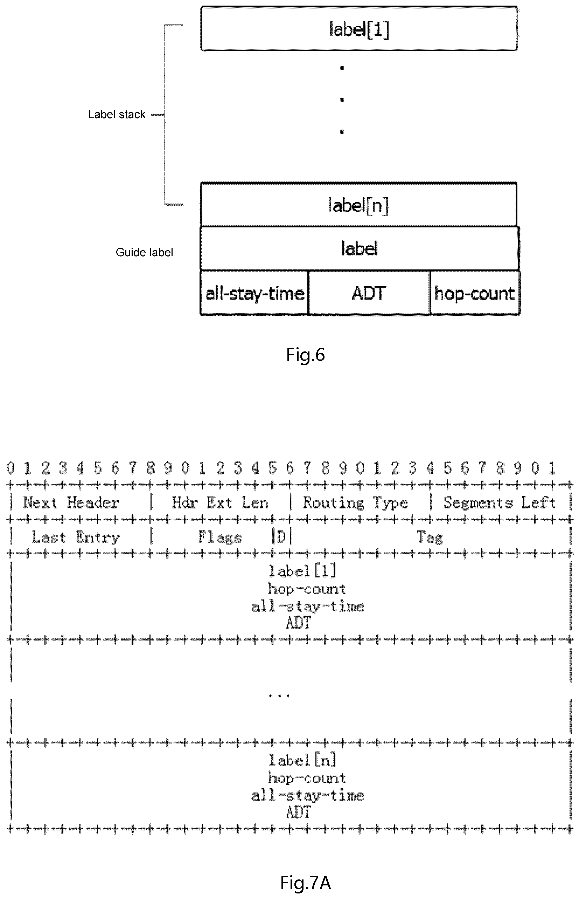

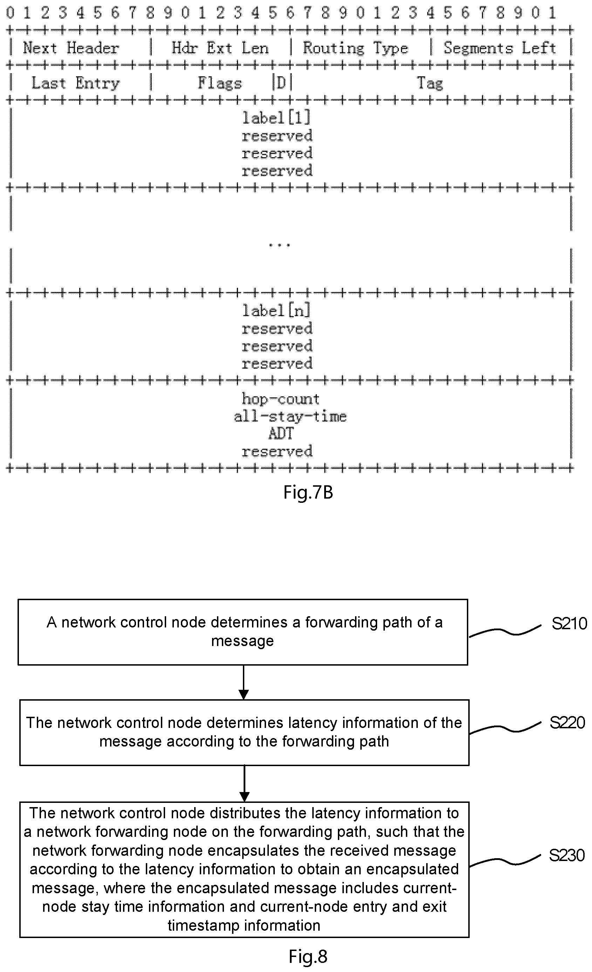

For example, in the encapsulation format of the SRv6 data packet, refer to Fig. 7A, which is a schematic diagram of an encapsulation format of an SRv6 data packet according to an embodiment of the present disclosure. As shown in Fig. 7A, the message includes a plurality of segment labels label[n], and each segment label corresponds to a network forwarding node on the message forwarding path, and includes a first time field all-stay-time, a second time field ADT, and a third time field hop-count, where the first time field carries the previous-hop stay time information, the second time field ADT carries the previous-hop entry and exit timestamp information, and the third time field hop-count carries the previous hop count information. For another example, as shown in Fig. 7B, the message includes a plurality of segment labels label[n], each segment label corresponds to a network forwarding node on the message forwarding path, and additionally, another independent segment label is further included and includes a first time field all-stay-time, a second time field ADT, and a third time field hop-count, where the first time field all-stay-time carries the previous-hop stay time information, the second time field ADT carries the previous-hop entry and exit timestamp information, and the third time field hop-count carries the previous hop count information. The current-node stay time information is determined according to the previous-hop stay time information and the previous-hop entry and exit timestamp information, and is written into the first time field all-stay-time included in the segment label corresponding to the current node.

It should be understood that the message includes a plurality of segment labels, and each segment label corresponds to a network forwarding node on the message forwarding path.

The encapsulation process for the message includes:
acquiring an entry timestamp and an exit timestamp of the message;
determining the current-node entry and exit timestamp information according to a difference between the exit timestamp and the entry timestamp; and
writing the current-node entry and exit timestamp information into a second time field included in a segment label corresponding to the current node.

It should be understood that each segment label includes the second time field; when the network forwarding node receives the message, the entry timestamp is applied at an entry port; after scheduling the message in the deterministic queue, the exit timestamp is applied at an exit port; and the current-node entry and exit timestamp information is determined according to the difference between the exit timestamp and the entry timestamp, and the current-node entry and exit timestamp information is written into the second time field included in the segment label in the message.

Exemplarily, as shown in Fig. 7A, the message includes a plurality of segment labels label[n], and each segment label corresponds to a network forwarding node on the message forwarding path, and includes a second time field ADT. For another example, as shown in Fig. 7B, the message includes a plurality of segment labels label[n], and each segment label corresponds to a network forwarding node on the message forwarding path, and additionally, another independent segment label is further included, and includes a second time field ADT. Therefore, the current-node entry and exit timestamp information is written into the second time field ADT included in the segment label.

It should be understood that the message includes a plurality of segment labels, and each segment label corresponds to a network forwarding node on the message forwarding path.

The encapsulation process for the message includes:
determining hop count information of the current node, and writing the hop count information of the current node into the hop count field included in the segment label corresponding to the current node.

It should be understood that each segment label includes the hop count field, during encapsulating the received message, the previous hop count information is acquired from the hop count field included in the segment label, and the hop count information of the current node is determined according to the previous hop count information, and is written into the hop count field included in the segment label.

It should be understood that the message includes a label stack.

The encapsulation process for the message includes:
acquiring a stack bottom label of the label stack;
acquiring previous-hop stay time information from a first time field included in the stack bottom label, and acquiring previous-hop entry and exit timestamp information from a second time field included in the stack bottom label;
determining the current-node stay time information according to the previous-hop stay time information and the previous-hop entry and exit timestamp information; and
replacing the previous-hop stay time information in the first time field with the current-node stay time information.

For example, in the encapsulation format of the SR-MPLS data packet, refer to Fig. 6, which is a diagram of a structure of an encapsulation format of an SR-MPLS data packet according to an embodiment of the present disclosure. As shown in Fig. 6, an encapsulation structure includes a label stack {label[1], label[2], ..., label[n]}, as well as a guide label, and a stack bottom label. Each label stack label[n] includes a node label of a next-hop network forwarding node. The stack bottom label includes a first time field all-stay-time, a second time field ADT, and a third time field hop-count, where the first time field all-stay-time carries the previous-hop stay time information, the second time field ADT carries the previous-hop entry and exit timestamp information, and the third time field hop-count carries the previous hop count information. The current-node stay time information is determined according to the previous-hop stay time information and the previous-hop entry and exit timestamp information, and the previous-hop stay time information in the first time field all-stay-time is replaced with the current-node stay time information.

It should be understood that the message includes a label stack.

The encapsulation process for the message includes:
acquiring an entry timestamp and an exit timestamp of the message;
determining the current-node entry and exit timestamp information according to a difference between the exit timestamp and the entry timestamp; and
writing the current-node entry and exit timestamp information into the second time field included in the stack bottom label of the label stack.

It should be understood that the stack bottom label of the label stack includes the second time field; when the network forwarding node receives the message, the entry timestamp is applied at an entry port; after scheduling the message in the deterministic queue, the exit timestamp is applied at an exit port; and the current-node entry and exit timestamp information is determined according to the difference between the exit timestamp and the entry timestamp, and the current-node entry and exit timestamp information is written into the second time field included in the stack bottom label of the label stack.

It should be understood that the message includes a label stack.

The encapsulation process for the message includes:
determining hop count information of the current node, and writing the hop count information of the current node into the hop count field included in the stack bottom label of the label stack.

It should be understood that the stack bottom label of the label stack includes the hop count field, during encapsulating the received message, the previous hop count information is acquired from the hop count field included in the segment label, and the hop count information of the current node is determined according to the previous hop count information, and is written into the hop count field included in the stack bottom label of the label stack.

Exemplarily, as shown in Fig. 6, the message includes the label stack, and the stack bottom label of the label stack includes the hop count field hop-sount. Therefore, the hop count information of the current node is written into the hop count field hop-count included in the stack bottom label of the label stack.

In another specific embodiment, a message includes a label stack, and an encapsulation process for the message includes:
acquiring current-node allowed stay time information;
acquiring a stack bottom label of the label stack;
acquiring previous-hop stay time information from a first time field included in the stack bottom label, and acquiring previous-hop entry and exit timestamp information from a second time field included in the stack bottom label;
determining current-node stay time information according to the current-node allowed stay time information, the previous-hop stay time information, and the previous-hop entry and exit timestamp information; and
replacing the previous-hop stay time information in the first time field with the current-node stay time information.

For example, in the encapsulation format of the SR-MPLS data packet, referring to Fig. 4, an encapsulation structure includes a label stack {label[1], label[2], ..., label[n]}, as well as a guide label, and a stack bottom label. Each label stack includes a node label of a next-hop network forwarding node. The stack bottom label includes a first time field stay-time and a second time field ADT, where the first time field stay-time carries the previous-hop stay time information, and the second time field ADT carries the previous-hop entry and exit timestamp information. The current-node stay time information is determined according to the current-node allowed stay time information, the previous-hop stay time information, and the previous-hop entry and exit timestamp information, and the previous-hop stay time information in the first time field stay-time is replaced with the current-node stay time information.

In another specific embodiment, the acquiring current-node allowed stay time information includes one of the following:
acquiring the current-node allowed stay time information from a third time field included in the stack bottom label of the label stack;
   or,
popping a stack top label of the message, where the stack top label is a node label, and looking up the current-node allowed stay time information corresponding to the node label in a preset label forwarding table.

It should be understood that the stack bottom label may also include the third time field used to carry the current-node allowed stay time information, and in the message encapsulating process, the current-node allowed stay time information is acquired from the third time field included in the stack bottom label of the label stack of the message. For another example, referring to Fig. 4, which is the schematic diagram of the encapsulation format of the SR-MPLS data packet according to this embodiment of the present disclosure, as shown in Fig. 4, the encapsulation format includes a label stack {label[1], label[2], ..., label[n]}, where each label stack includes a node label of a next-hop network forwarding node. By popping the stack top label label[1] of the message, the node label is acquired, and the current-node allowed stay time corresponding to the node label is looked up in the preset label forwarding table.

Referring to Fig. 8, which is a schematic flowchart of a message processing method according to an embodiment of the present disclosure. The method is applied to a network control node, and includes, but is not limited to, the following steps S210 to S230:
Step S210: Determine a forwarding path of a message.
Step S220: Determine latency information of the message according to the forwarding path.
Step S230: Distribute the latency information to a network forwarding node on the forwarding path, such that the network forwarding node encapsulates the received message according to the latency information to obtain an encapsulated message, where the encapsulated message includes current-node stay time information and current-node entry and exit timestamp information.

It should be understood that the network control node first determines the forwarding path of the message, and determines the latency information of the message according to the forwarding path. The latency information may be allowed stay time corresponding to a plurality of network forwarding nodes, a total latency value of the message on the forwarding path, or the like. The latency information is distributed to the network forwarding node on the forwarding path through the network control node, such that the network forwarding node encapsulates the received message according to the latency information, and the encapsulated message includes the current-node stay time information and the current-node entry and exit timestamp information.

During specific implementation, the network control node acquires basic network information such as network topology, link latency, and node processing latency. According to a traffic flow, the forwarding path of the message is calculated, and the latency information of the message is determined.

It should be understood that the latency information includes the allowed stay time corresponding to the plurality of network forwarding nodes.

The step of distributing the latency information to a network forwarding node on the forwarding path includes:
acquiring node labels corresponding to the plurality of network forwarding nodes to obtain a mapping relationship between the node labels and the allowed stay time information; and
sending the mapping relationship between the node labels and the allowed stay time information to the corresponding network forwarding node, such that the network forwarding node determines the current-node stay time information according to the mapping relationship between the node labels and the allowed stay time information.

It should be understood that the network control node determines the allowed stay time information of each network forwarding node according to latency requirements of the traffic flow message, the link latency in the forwarding path, and node processing latency information. For determining the allowed stay time of the node, reference may be made to the above related descriptions, which will not be repeated herein.

During specific implementation, the network control node acquires the node labels corresponding to the plurality of network forwarding nodes in the forwarding path, determines the mapping relationship between the node labels and the allowed stay time information, and sends the mapping relationship to the corresponding network forwarding node, such that the network forwarding node determines the current-node stay time information according to the mapping relationship.

In another specific embodiment, the step that the network control node acquires node labels corresponding to the plurality of network forwarding nodes to obtain a mapping relationship between the node labels and the allowed stay time information further includes:
acquiring node labels and forwarding ports corresponding to the plurality of network forwarding nodes to obtain a mapping relationship between the node labels, the forwarding ports, and the allowed stay time information.

In another specific embodiment, after the network forwarding node receives the mapping relationship sent by the network control node, a corresponding label forwarding table is established according to the mapping relationship. The network forwarding node determines the current-node stay time information according to the label forwarding table.

It should be understood that the latency information includes the allowed stay time corresponding to the plurality of network forwarding nodes.

The step of distributing the latency information to a network forwarding node on the forwarding path includes:
for allowed stay time information corresponding to each network forwarding node, writing the allowed stay time information into a segment label that corresponds to the network forwarding node and is included in the message; and
distributing the message to the network forwarding node on the forwarding path, such that the network forwarding node determines the current-node stay time information according to the allowed stay time information carried in the message,
where the message includes a plurality of segment labels, and each segment label corresponds to a network forwarding node.

Correspondingly, for the encapsulation format of the SRv6 data packet, as shown in Fig. 5A and Fig. 5B, the message includes a plurality of segment labels. Each segment label corresponds to a network forwarding node. Allowed stay time information is written into the segment label that corresponds to the network forwarding node and is included in the message. Specifically, the allowed stay time information is written in a field max-time in the segment label, and then, the message is distributed to the network forwarding node on the forwarding path, such that the network forwarding node determines the current-node stay time information according to the allowed stay time information carried in the message.

In another specific embodiment, for allowed stay time information corresponding to each network forwarding node, the allowed stay time information is written into a stack bottom label of a label stack included in the message.

Correspondingly, for the encapsulation format of the SR-MPLS data packet, as shown in Fig. 4, an encapsulation structure includes a label stack {label[1], label[2], ..., label[n]}, as well as a guide label, and a stack bottom label. For allowed stay time information corresponding to each network forwarding node, the allowed stay time information may written into the stack bottom label of the label stack included in the message.

It should be understood that the latency information includes total latency information, and the total latency information indicates a total latency value of the message on the forwarding path; and
the step of distributing the latency information to a network forwarding node on the forwarding path includes:
writing the total latency information into the message; and
distributing the message to the network forwarding node on the forwarding path, such that the network forwarding node determines the current-node stay time information according to the total latency information carried in the message.

It should be understood that the network control node determines the total latency value of the message on the forwarding path according to the latency requirements of the traffic flow message, the link latency in the forwarding path, and the node processing latency information. The total latency value is the sum of allowed stay times of all the network forwarding nodes. It should be understood that for different message encapsulation formats, for a position of the total latency information carried in the message, reference may be made to the above related descriptions, which will not be repeated herein.

The solution of this embodiment of the present disclosure is further described in conjunction with the network link shown in Fig. 3.

As shown in Fig. 3, in the figure, the routers R1, R2, and R3 are included, with the link latency of 10 µs from the router R1 to the router R2, and the link latency of 10 µs from the router R2 to the router R3. Under the requirements of the time sensitive flow, the allowed stay times*T*_{1*stay*}, *T*₂*_{stay},* and *T*_{3*stay*} for the three routers are all 20 µs, the total latency information *Tₐₗₗ* of the three routers is 60 µs, and the hop count information n is 3.A timestamp for a message arriving at the router R1 is recorded as 0 µs.

### Embodiment 1:

A network forwarding node encapsulates a message, the encapsulated message carries current-node stay time information *T_{adj}* and current-node entry and exit timestamp information *Dₜ,* and the SR-MPLS encapsulation format is used. A network control node distributes allowed stay time information to a corresponding network forwarding node on a forwarding path.

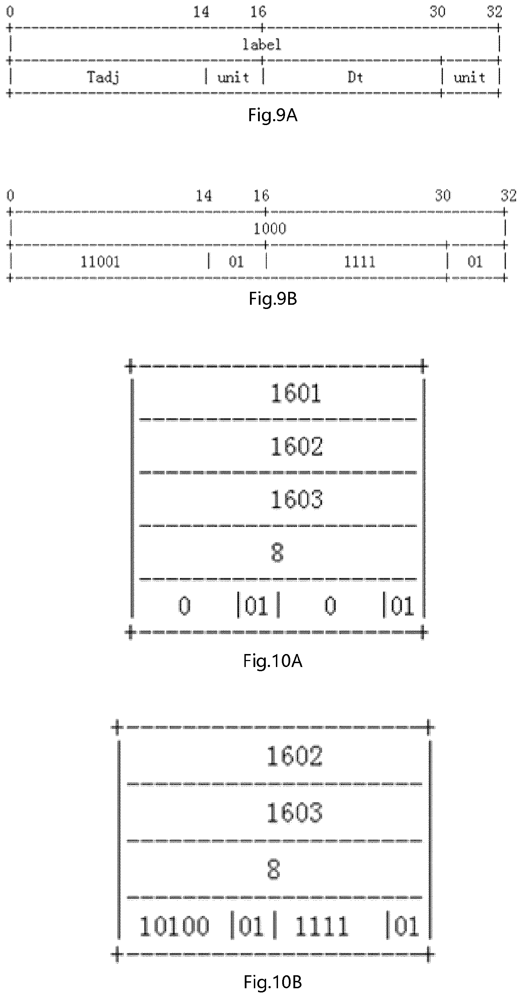

The SR-MPLS encapsulation format of the message is shown in Fig. 9A. A guide label occupies 32 bits, and bits 1 to 16 of a line following the guide label represent the stay time information *T_{adj}*, with an initial value of 0. The first 14 bits indicate a specific value, the last 2 bits indicate a unit, and 00, 01, 10, and 11 respectively represent ns, µs, ms, and s. The bits 17 to 32 represent the entry and exit timestamp information *Dₜ,* with an initial value of 0. Bits 17 to 30 indicate a specific value, the last 2 bits indicate a unit, and 00, 01, 10, and 11 respectively represent ns, µs, ms, and s, making a total of 32 bits.

Specifically, as shown in Fig. 9B, the guide label has a value of 1000 (which is 8 in decimal). The first 14 bits of a line following the guide label represent 11001, the last 2 bits represent 01, indicating that the unit is µs, and therefore the stay time information *T_{adj}* is 25 µs. Bits 17 to 30 represent 1111, the last 2 bits represent 01, indicating that the unit is µs, and therefore the entry and exit timestamp *Dₜ* is 15 µs.

A specific process of the message processing method provided in this embodiment of the present disclosure is as follows:
the label forwarding table for the nodes on the path is shown in Table 1, a network controller generates a stack label according to a calculated path for a traffic flow and distributes a new stack instruction to an entry router R1, and stay time information (with an initial value of 0) and entry and exit timestamp information (with an initial value of 0) are added in a stack, as shown in Fig. 10A.

The message arrives at the router R1, a timestamp is applied, and a stack containing 5 entries is inserted into the received message at the router R1.Then, a stack top label 1601 is popped. Based on the label forwarding table shown in Table 1, a forwarding port interface1 (with a next hop being a router R2) and allowed stay time T_{1stay} = 20 µs are looked up. The T_{1stay}=11001 (in binary) is written into a first time field stay-time, and current-node stay time information T_{adj1} = T_{1stay} = 20 µs. After message processing, the message is placed in a deadline scheduling queue with a scheduling time of 20 µs corresponding to the forwarding port interface1.After scheduling, a timestamp is applied at an exit port. Assuming that the obtained entry and exit timestamp informationDₜ₁ is 15 µs, the entry and exit timestamp information Dₜ₁ is encapsulated in the message, and the message is forwarded.

The message arrives at the router R2, and the stack is shown in Fig. 10B, with an arrival timestamp of 25 µs. Then, the router R2 pops a stack top label 1602, looks up a forwarding port interface2 (with a next hop being a router R3) and allowed stay time *T*_{2*stay*} = 20 µs in the label forwarding table shown in Table 1, meanwhile, reads encapsulated stay time information *T*_{*adj*1} *=* 20µs and entry and exit timestamp information *D*_{*t*1} = 15µs from the message, and then writes current-node stay time information *T*_{*adj*2} *= T*₂*_{stay} +* (*T*_{*adj*1} - *D*_{*t*1}) = 25 µs into the first time field stay-time.After message processing, the message is placed in a deadline scheduling queue with a scheduling time of 25µs corresponding to the forwarding port interface 2.After scheduling, a timestamp is applied at an exit interface. Assuming that the obtained entry and exit timestamp information*D*_{*t*2} is 15 µs, the entry and exit timestamp information *Dₜ₂* is encapsulated in the message, and the message is forwarded.

The message arrives at the router 3, with an arrival timestamp of 50 µs. The router R2 pops a stack top label 1603, with a stack shown in Fig. 10C, looks up a forwarding port interface3 and allowed stay time *T*_{3*stay*} = 20 µs in the label forwarding table shown in Table 1, meanwhile, reads encapsulated stay time information *T*_{*adj*2} = 25 µs and entry and exit timestamp information *D*_{*t*2} *=* 15 µs from the message, and then writes current-node stay time information *T*_{*adj*3} = *T*₃*_{stay} + (T*_{*adj*2} *- D*_{*t*2}) = 30 µs into the first time field stay-time.After message processing, the message is placed in a deadline scheduling queue with a scheduling time of 30µs corresponding to the forwarding port interface3.After scheduling, a timestamp is applied at the exit port. Assuming that the obtained entry and exit timestamp information *D*_{*t*3} is 25 µs, the entry and exit timestamp information *D*_{*t*3} is encapsulated in the message, and the message is forwarded.

### Embodiment 2:

A network forwarding node encapsulates a message, the encapsulated message carries current-node allowed stay time information *T_{stay},* current-node stay time information *T_{adj}*, and current-node entry and exit timestamp information *Dₜ,* and the SRv6 encapsulation format is used.

The SRv6 encapsulation format of the message is shown in Fig. 11A. The least significant bit of Flags is 0, and each of a label, the current-node allowed stay time information *T_{stay},* the current-node stay time information *T_{adj}*, and the current-node entry and exit timestamp information *Dₜ* occupies 32 bits. The first 30 bits of the current-node allowed stay time information *T_{stay}* indicate a specific value, the last 2 bits indicate a unit, and 00, 01, 10, and 11 respectively represent ns, µs, ms, and s; the first 30 bits of the current-node stay time information *T_{adj}* indicate a specific value T_{adj}, the last 2 bits indicate a unit, and 00, 01, 10, and 11 respectively represent ns, µs, ms, and s; and the first 30 bits of the current-node entry and exit timestamp information *Dₜ* indicate a specific value Dₜ, the last 2 bits indicate a unit, and 00, 01, 10, and 11 respectively represent ns, µs, ms, and s, making a total of 128 bits.

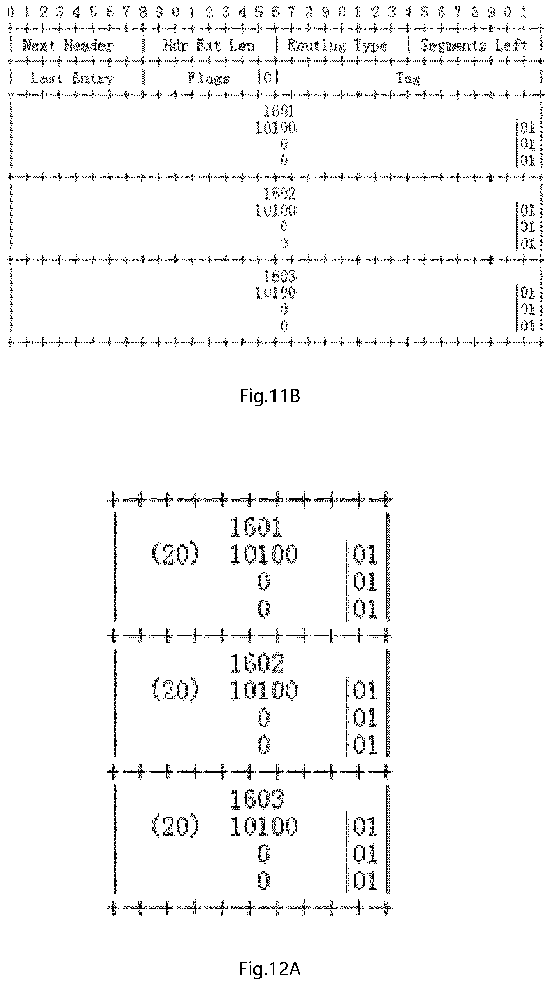

Specifically, as shown in Fig. 11B, a segment label label[1] has a value of 1601, the first 30 bits of a corresponding field max-time indicate 10100, and the last 2 bits indicate 01, indicating that the unit is µs, and therefore the allowed stay time information *T*_{1*stay*} is 20 µs. The first 30 bits of a corresponding field stay-time indicate 0, and the last 2 bits indicate 01, indicating that the unit is µs, and therefore the stay time information *T*_{*adj*1} is 0 µs. The first 30 bits of a corresponding field ADT indicate 0, and the last 2 bits indicate 01, indicating that the unit is µs, and therefore the entry and exit timestamp information *D*_{*t*1} is 0 µs.

A segment label label[2] has a value of 1602, the first 30 bits of a corresponding field max-time indicate 10100, and the last 2 bits indicate 01, indicating that the unit is µs, and therefore the allowed stay time information *T*_{2*stay*} is 20 µs. The first 30 bits of a corresponding field stay-time indicate 0, and the last 2 bits indicate 01, indicating that the unit is µs, and therefore the stay time information *T*_{*adj*2} is 0 µs. The first 30 bits of a corresponding field ADT indicate 0, and the last 2 bits indicate 01, indicating that the unit is µs, and therefore the entry and exit timestamp information *D*_{*t*2} is 0 µs.

A segment label label[3] has a value of 1603, the first 30 bits of a corresponding field max-time indicate 10100, and the last 2 bits indicate 01, indicating that the unit is µs, and therefore the allowed stay time information *T*_{3*stay*} is 20 µs. The first 30 bits of a corresponding field stay-time indicate 0, and the last 2 bits indicate 01, indicating that the unit is µs, and therefore the stay time information *T*_{*adj*3} is 0 µs. The first 30 bits of a corresponding field ADT indicate 0, and the last 2 bits indicate 01, indicating that the unit is µs, and therefore the entry and exit timestamp information *D*_{*t*3} is 0 µs.

A specific process of the message processing method provided in this embodiment of the present disclosure is as follows:
a network controller generates a segment label stack according to a calculated path for a traffic flow, and distributes a new stack instruction to an entry router R1, and stay time information, entry and exit timestamp information, and allowed stay information are added in the stack, as shown in Fig. 12A.

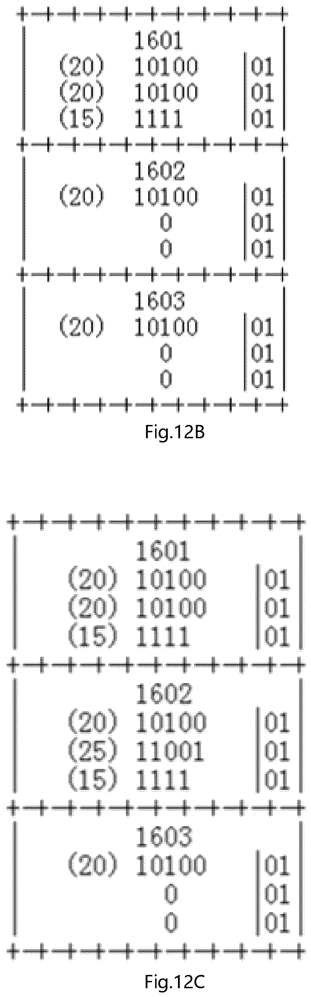

A timestamp when the message arrives at the router R1 is 0 µs. Three segment list stacks are inserted into the received message at the entry router R1.A label value corresponding to a currently activated segment indicated by the segment list is 1601. Allowed stay time information *T*_{1*stay*} = 20µs in the segment is read, *T*_{1*stay*} is written into a field stay-time in the segment, and current-node stay time information T_{adj1} = *T*_{1*stay*} = 20µs.After message processing, the message is placed in a deadline scheduling queue with a scheduling time of 20µs corresponding to a forwarding port. After scheduling, a timestamp is applied at an exit port. Assuming that the obtained entry and exit timestamp information *D*_{*t*1} is 15µs, the entry and exit timestamp information *D*_{*t*1} is encapsulated in the field ADT in the segment, a stack encapsulation format is shown in Fig. 12B, and then the message is forwarded.

The message arrives at a router R2, where a stack is shown in Fig. 12B. The arrival timestamp is 25 µs. A label value corresponding to a currently activated segment indicated by the segment list is 1602. Allowed stay time information *T*_{2*stay*} = 20 µs in the segment is read, and meanwhile stay time information *T*_{*adj*1} = 20µs and entry and exit timestamp information *D*_{*t*1} = 15µs encapsulated in the previous segment of the message are read.*T*_{*adj*2} = *T*_{2*stay*} + (*T*_{*adj*1} *- D*_{*t*1}) = 25 µs is written into a field stay-time of the currently activated segment.After message processing, the message is placed in a deadline scheduling queue with a scheduling time of 25µs corresponding to the forwarding port. After scheduling, a timestamp is applied at the exit port. Assuming that the obtained entry and exit timestamp information *D*_{*t*2} is 15µs, the entry and exit timestamp information *D*_{*t*2} is encapsulated in a field ADT in the currently activated segment, a stack encapsulation format is shown in Fig. 12C, and then the message is forwarded.

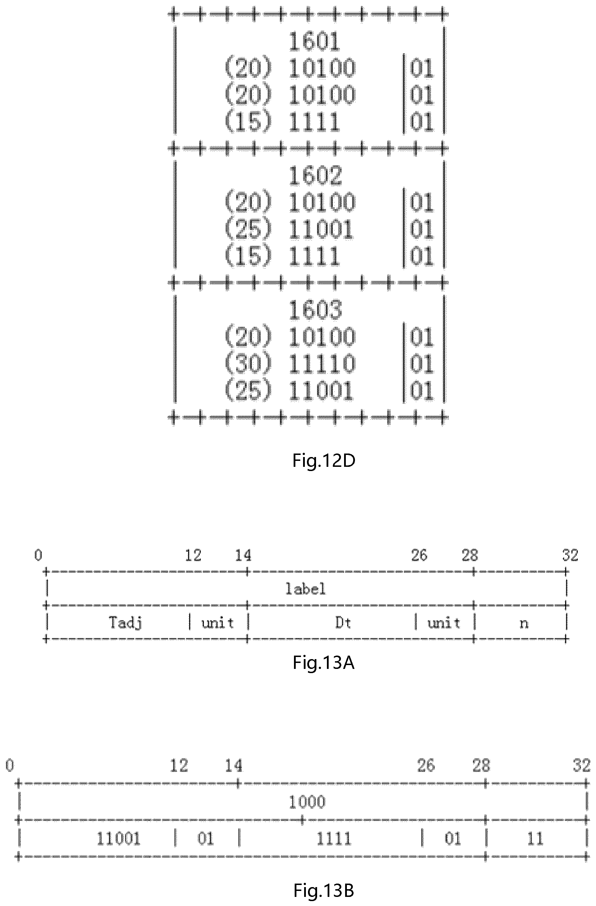

The message arrives at a router R3, where a stack is shown in Fig. 12C. The arrival timestamp is 50 µs. A label value corresponding to the currently activated segment indicated by the segment list is 1603. Allowed stay time information *T*_{3*stay*} = 20 µs in the segment is read, and meanwhile stay time information *T*_{*adj*2} = 25 µs and entry and exit timestamp information *D*_{*t*2} *=* 15µsencapsulated in the previous segment of the message are read. *T*_{*adj*3} = *T*₃*_{stay} +* (*T*_{*adj*2} *- Dₜ₂*) = 30µs is written into the field stay-time of the currently activated segment. After message processing, the message is placed in a deadline scheduling queue with a scheduling time of 30µs corresponding to the forwarding port. After scheduling, a timestamp is applied at the exit port. Assuming that the obtained entry and exit timestamp information *D*_{*t*3} is 25µs, the entry and exit timestamp information *D*_{*t*3} is encapsulated in the field ADT in the currently activated segment, a stack encapsulation format is shown in Fig. 12D, and then the message is forwarded.

### Embodiment 3:

A network forwarding node encapsulates a message, the encapsulated message carries current-node stay time information, current-node entry and exit timestamp information *Dₜ,* and hop count information n, and the SR-MPLS encapsulation format is used.A network control node distributes allowed stay time information to a corresponding network forwarding node on a forwarding path. The current-node stay time information *T_{adj}* represents total latency information *T_{all.}*

The SR-MPLS encapsulation format of the message is shown in Fig. 13A. A guide label occupies 32 bits, and bits 1 to 14 of a line following the guide label represent the current-node stay time information *T_{adj}*, with an initial value of 0. The first 12 bits indicate a specific value, the last 2 bits indicate a unit, and 00, 01, 10, and 11 respectively represent ns, µs, ms, and s. The bits 15 to 28 represent the current-node entry and exit timestamp information *Dₜ,* with an initial value of 0. Bits 15 to 26 indicate a specific value, the last 2 bits indicate a unit, and 00, 01, 10, and 11 respectively represent ns, µs, ms, and s. The bits 28 to 32 represent the hop count information n, making a total of 32 bits.

Specifically, as shown in Fig. 13B, the guide label has a value of 1000 (which is 8 in decimal). The first 12 bits of a line following the guide label represent 11001, the last 2 bits represent 01, indicating that the unit is µs, and therefore the stay time information *T_{adj}* is 25 µs. The bits 15 to 26 represent 1111, the last 2 bits represent 01, indicating that the unit is µs, and therefore the entry and exit timestamp *Dₜ* is 15 µs. The last 4 bits represent 11, and therefore the hop count n is 3.

A specific process of the message processing method provided in this embodiment of the present disclosure is as follows:
a network controller generates a stack label according to a calculated path for a traffic flow, and distributes a new stack instruction to an entry router R1, and stay time information, entry and exit timestamp information, and hop count information are added in the stack, as shown in Fig. 14A.

A timestamp when the message arrives at the router R1 is 0 µs, and a stack containing 5 entries is inserted into the received message at the entry router R1.The router R1 pops a stack top label 1601, looks up a forwarding port interface1 (with a next hop being a router R2) in the label forwarding table shown in Table 1.Total latency information *T_{adj}* is read and is equal to 60 µs, entry and exit timestamp information *Dₜ* is equal to 0, and the hop count n is equal to 3.The current-node actual allowed stay time (*T_{adj}* - *Dₜ)*/*n* is calculated as 20 µs, the hop count information (n-1=2) is rewritten into a field hop-count in the message, *T*_{*adj*1} = (*T_{adj} - Dₜ*)=60 µs is rewritten into a field all-stay-time in the message. After message processing, the message is placed in a deadline scheduling queue with a scheduling time of 20 µs corresponding to the forwarding port interface1.After scheduling, a timestamp is applied at an exit port. Assuming that the obtained entry and exit timestamp information *D*_{*t*1} is 15 µs, the entry and exit timestamp information *D*_{*t*1} is encapsulated in a field ADT in the message, and a data packet is forwarded.

The message arrives at the router R2, with a stack shown in Fig. 14B. The arrival timestamp is 25µs. The router R2 pops a stack top label 1602, looks up a forwarding port interface2 (with a next hop being a router R3) in the label forwarding table shown in Table 1.Meanwhile, *T*_{*adj*1}=60µs encapsulated in the message is read, the value of *D*_{*t*1} is 15µs, and the hop count n is 2.Current-node actual allowed stay time (*T*_{*adj*1} - *D*_{*t*1})/*n*=22.5µs is calculated, the hop count information (n-1=1) is rewritten into the field hop-count in the message, *T*_{*adj*2} *=* (*T*_{*adj*1} *- D*_{*t*1})=45 µs is rewritten into the field all-stay-time in the message. After message processing, the message is placed in a deadline scheduling queue with a scheduling time of 22.5 µs corresponding to the forwarding port interface1.After scheduling, a timestamp is applied at the exit port. Assuming that the obtained entry and exit timestamp information *D*_{*t*2} is 15 µs, the entry and exit timestamp information *Dₜ₂* is encapsulated in the field ADT in the message, and the data packet is forwarded.

The message arrives at the router R3, with a stack shown in Fig. 14C. The arrival timestamp is 50µs. The router R3 pops a stack top label 1603, and looks up a forwarding port interface 3 according to the label forwarding table shown in Table 1.Meanwhile, *T*_{*adj*2}=45 µs encapsulated in the message is read, the value of *D*_{*t*2} is 15µs, and the hop count n is 1.Current-node actual allowed stay time (*T*_{*adj*2} - *D*_{*t*2}*)*/*n*=30 µs is calculated, and the hop count information (n-1=0) indicates a final-hop forwarding node. After message processing, the message is placed in a deadline scheduling queue with a scheduling time of 30 µs corresponding to the forwarding port interface1.After scheduling, a timestamp is applied at the exit port. Assuming that the obtained entry and exit timestamp information *D*_{*t*3} is 25 µs, the entry and exit timestamp information *D*_{*t*3} is encapsulated in the field ADT in the message, and the data packet is forwarded.

### Embodiment 4:

Current-node stay time information *T_{adj}* and current-node entry and exit timestamp information *Dₜ* are encapsulated based on a second-layer Ethernet frame. A network control node distributes allowed stay time information to a corresponding network forwarding node on a forwarding path.

The encapsulation format of the message is shown in Fig. 15A. Bits 1 to 16 represent a header label, which is a deadline tag (D-TAG) type value. Bits 17 to 30 represent the current-node stay time information *T_{adj}*, the last 2 bits represent a unit, and 00, 01, 10, and 11 respectively represent ns, µs, ms, and s. Bits 33 to 46 represent the current-node entry and exit timestamp information *Dₜ,* the last 2 bits represent a unit, and 00, 01, 10, and 11 respectively represent ns, µs, ms, and s.

Specifically, as shown in Fig. 15B, the first 16 bits represent an Ethernet type value of 0x88F7. Bits 17 to 30 represent 10100, the last 2 bits represent 01, indicating that the unit is µs, and therefore the stay time information *T_{adj}* is 20µs. Bits 33 to 46 represent 1111, the last 2 bits represent 01, indicating that the unit is µs, and therefore the entry and exit timestamp information *Dₜ* is 15 µs.A specific processing flow for encapsulating second-layer Ethernet frame data is similar to that in Embodiment 1, which will not be repeated herein.

### Embodiment 5:

Based on a second-layer Ethernet frame, current-node stay time information *T_{adj}* , current-node entry and exit timestamp information *Dₜ,* and hop count information n are encapsulated, and a network control node distributes allowed stay time information to a corresponding network forwarding node on a forwarding path.The current-node stay time information *T_{adj}* represents total latency information *T_{all.}*

An encapsulation format of a message is shown in Fig. 16A. Bits 1 to 16 represent a header label, which is a deadline tag (D-TAG) type value. Bits 17 to 28 represent the total latency information *T_{all.}* Bits 29 to 30 represent a unit, and 00, 01, 10, and 11 respectively represent ns, µs, ms, and s. Bits 31 to 42 represent the current-node entry and exit timestamp information *Dₜ,* bits 43 to 44 represent a unit, and 00, 01, 10, and 11 respectively represent ns, µs, ms, and s. The last 4 bits represent hop count information n.

Specifically, as shown in Fig. 16B, the first 16 bits represent an Ethernet type value of 0x88F8. Bits 17 to 28 represent 111100, the last 2 bits represent 01, indicating that the unit is µs, and therefore the total latency information *Tₐₗₗ* is 60µs. Bits 31 to 42 represent 1111, the last 2 bits represent 01, indicating that the unit is µs, and therefore the entry and exit timestamp information *Dₜ* is 15 µs. The last 8 bits represent 11, and therefore the hop count m is 3.A specific processing flow for encapsulating the second-layer Ethernet frame data is similar to that in Embodiment 3, which will not be repeated herein.

According to the solutions of the embodiments in the present disclosure, when encapsulating the message, the network forwarding node adds the current-node stay time information and the current-node entry and exit timestamp information to the message, thereby carrying the current-node stay time information and the current-node entry and exit timestamp information to a downstream network forwarding node through the message, such that the downstream network forwarding node dynamically adjusts the stay time information based on previous-hop stay time information and entry and exit timestamp information, and achieves message scheduling and forwarding based on the adjusted stay time information, so as to provide a deterministic end-to-end latency in the time sensitive networking.

It should be understood that although the operations in the embodiments of the present disclosure are described in a specific order in the accompanying drawings, it should not be construed as requiring these operations to be performed in the specific or serial order shown, or as requiring all shown operations to be performed to achieve a desired result. In certain environments, multitasking and parallel processing may be advantageous.

It should be further understood that each embodiment described above has its own focus, and for parts not detailed or recorded in a certain embodiment, reference may be made to the related descriptions in other embodiments.

An embodiment of the present disclosure further provides a network device. As shown in Fig. 17, the network device 900 includes, but is not limited to:
a processor 910 and a memory 920, where
the memory 920 has program instructions stored therein, and the program instructions, when executed by the processor 910, cause the processor 910 to perform the message processing method described in any above embodiment.

In a specific embodiment, the above network device may be configured to implement the steps of the message processing method corresponding to an entry node in the above method embodiments.

In another specific embodiment, the above network device may be configured to implement the steps of the message processing method corresponding to an intermediate node in the above method embodiments.

It should be understood that the processor 910 and the memory 920 may be connected through a bus or other methods.

It should be understood that the processor 910 may be a central processing unit (CPU).The processor may also be another general-purpose processor, a digital signal processor (DSP), an application specific integrated circuit (ASIC), a field programmable gate array (FPGA) or another programmable logic device, a discrete gate or transistor logic device, a discrete hardware component, etc. The general-purpose processor may be a microprocessor, or any conventional processor, etc. Alternatively, the processor 910 adopts one or more integrated circuits to execute related programs, thereby implementing the technical solutions provided by the embodiments of the present disclosure.

The memory 920, as a non-transitory computer-readable storage medium, may be configured to store non-transitory software programs and non-transitory computer-executable programs, such as the message processing method performed on a network device side described in any embodiment of the present disclosure. The processor 910 implements the aforementioned message processing method performed on the network device side by running the non-transitory software programs and instructions stored in the memory 920.

The memory 920 may include a program storage area and a data storage area. The program storage area may store an operating system and an application program required by at least one function. The data storage area may store data for performing the aforementioned message processing method performed on the network device side or a method for training a spectrum sensing model.In addition, the memory 920 may include a high-speed random access memory, and may also include a non-transitory memory, such as at least one of a magnetic memory device, a flash memory, or other non-transitory solid-state memories. In some implementations, the memory 920 includes memories remotely set relative to the processor 910. These remote memories may be connected to the processor through a network. The examples of the above network include, but are not limited to, an Internet, an intranet, a local area network, a mobile communication network, and a combination thereof.

The non-transitory software programs and instructions required to implement the aforementioned message processing method performed on the network device side are stored in the memory 920, and perform the message processing method performed on the network device side provided in any embodiment of the present disclosure when executed by one or more processors 910.

An embodiment of the present disclosure further provides a computer-readable storage medium, having program instructions stored therein, and the program instructions, when executed by a computer, implement the message processing method described in any above embodiment.

In a specific embodiment, the above computer-readable storage medium may be configured to implement the steps of the message processing method corresponding to the network forwarding node in the above method embodiments.

In another specific embodiment, the above computer-readable storage medium may be configured to implement the steps of the message processing method corresponding to the network control node in the above method embodiments.

The computer storage medium according to this embodiment of the present disclosure may adopt any combination of one or more computer-readable media. The computer-readable medium may be a computer-readable signal medium or a computer-readable storage medium. The computer-readable storage medium may be, for example, but is not limited to, electric, magnetic, optical, electromagnetic, infrared, or semiconductor systems, apparatuses, or devices, or any combination of the above. More specific examples (a non-exhaustive list) of the computer-readable storage medium include: an electrical connection with one or more wires, a portable computer disk, a hard drive, a random access memory (RAM), a read only memory (ROM), an erasable programmable read only memory (EPROM or flash memory), an optical fiber, a portable compact disc read only memory (CD-ROM), an optical storage device, a magnetic storage device, or any suitable combination of the above. In the document, the computer-readable storage medium may be any tangible medium including or storing a program, and the program may be for use by or for use in conjunction with an instruction execution system, apparatus, or device.

The computer-readable signal medium may include data signals propagated in a base band or propagated as a part of a carrier wave, which bear computer-readable program code. The propagated data signal may take various forms, including but not limited to an electromagnetic signal, an optical signal, or any suitable combination of the above. The computer-readable signal medium may also be any computer-readable medium except the computer-readable storage medium. The computer-readable medium may send, propagate, or transmit programs for use by or for use in conjunction with the instruction execution system, apparatus, or device.

The program code included in the computer-readable medium may be transmitted by any proper medium, including but not limited to wireless, a wire, an optical cable, radio frequency (RF), etc., or any suitable combination of the above.

Computer program code for performing operations of the present disclosure may be written in one or more programming languages or a combination thereof, where the programming languages include object-oriented programming languages, such as Java, Smalltalk, and C++, and further include conventional procedural programming languages, such as "C" language or similar programming languages. The program code may be completely executed on a user computer, partially executed on the user computer, executed as a stand-alone software package, partially executed on the user computer and partially executed on a remote computer, or completely executed on the remote computer or a server. In the case of involving the remote computer, the remote computer may be connected to the user computer through any type of network, including a local area network (LAN) or a wide area network (WAN), or may be connected to an external computer (e.g., utilizing an Internet service provider for Internet connectivity).

An embodiment of the present disclosure provides a computer program product, having program instructions stored therein. The program instructions, when running on a computer, cause the computer to implement the message processing method described in any above embodiment.

In a specific embodiment, the above computer program product may be configured to implement the steps of the message processing method corresponding to the network forwarding node in the above method embodiments.

In another specific embodiment, the above computer program product may be configured to implement the steps of the message processing method corresponding to the network control node in the above method embodiments.

The above provides specific descriptions of some implementations of the present disclosure, but the present disclosure is not limited to the above implementations. Those skilled in the art may also make various equivalent transformations or substitutions, without departing from the essential shared conditions of the present disclosure, and these equivalent transformations or substitutions all fall within the scope defined by the present disclosure.

## Claims

1. A message processing method, applied to a network forwarding node, comprising:
encapsulating a received message to obtain an encapsulated message, wherein the encapsulated message comprises current-node stay time information and current-node entry and exit timestamp information.

2. The method according to claim 1, wherein the message comprises a guide label; and the encapsulation process comprises:
acquiring current-node allowed stay time information;
acquiring previous-hop stay time information from a first time field included in the guide label and previous-hop entry and exit timestamp information from a second time field included in the guide label;
determining the current-node stay time information according to the current-node allowed stay time information, the previous-hop stay time information, and the previous-hop entry and exit timestamp information; and
replacing the previous-hop stay time information in the first time field with the current-node stay time information.

3. The method according to claim 2, wherein the acquiring current-node allowed stay time information comprises at least one of the following:
acquiring the current-node allowed stay time information from a segment label corresponding to a current node in the message;
or,
popping a stack top label of the message, wherein the stack top label is a node label, and looking up the current-node allowed stay time information corresponding to the node label in a preset label forwarding table.

4. The method according to claim 1, wherein the message comprises a guide label; and the encapsulation process comprises:
acquiring previous-hop stay time information from a first time field included in the guide label and previous-hop entry and exit timestamp information from a second time field included in the guide label;
determining the current-node stay time information according to the previous-hop stay time information and the previous-hop entry and exit timestamp information; and
replacing the previous-hop stay time information in the first time field with the current-node stay time information.

5. The method according to claim 1, wherein the message comprises a guide label; and the encapsulation process comprises:
acquiring an entry timestamp and an exit timestamp of the message;
determining the current-node entry and exit timestamp information according to a difference between the exit timestamp and the entry timestamp; and
writing the current-node entry and exit timestamp information into a second time field included in the guide label.

6. The method according to claim 1, wherein the message comprises a guide label; and the encapsulation process comprises:
determining hop count information of the current node, and writing the hop count information of the current node into a hop count field included in the guide label.

7. The method according to any one of claims 1 to 6, wherein the guide label further comprises a label field, and the label field is used to identify the guide label through a fixed label value.

8. The method according to any one of claims 1 to 6, wherein the guide label further comprises a header label, and the header label is used to identify an Ethernet type of the message through a fixed label value.

9. The method according to claim 1, wherein the message comprises a plurality of segment labels, and each segment label corresponds to a network forwarding node on the message forwarding path; and
the encapsulation process comprises:
acquiring current-node allowed stay time information;
acquiring previous-hop stay time information from a first time field included in a segment label corresponding to a previous node, as well as previous-hop entry and exit timestamp information from a second time field included in the segment label corresponding to the previous node;
determining the current-node stay time information according to the current-node allowed stay time information, the previous-hop stay time information, and the previous-hop entry and exit timestamp information; and
writing the current-node stay time information into a first time field included in a segment label corresponding to the current node.

10. The method according to claim 9, wherein the acquiring current-node allowed stay time information comprises at least one of the following:
acquiring the current-node allowed stay time information from a third time field included in the segment label corresponding to the current node;
or,
acquiring a node label corresponding to the current node from a node label field included in the segment label corresponding to the current node, and looking up the current-node allowed stay time information corresponding to the node label of the current node in a preset label forwarding table.

11. The method according to claim 1, wherein the message comprises a plurality of segment labels, and each segment label corresponds to a network forwarding node on the message forwarding path; and
the encapsulation process comprises:
acquiring previous-hop stay time information from a first time field included in a segment label corresponding to a previous node, as well as previous-hop entry and exit timestamp information from a second time field included in the segment label corresponding to the previous node;
determining the current-node stay time information according to the previous-hop stay time information and the previous-hop entry and exit timestamp information; and
writing the current-node stay time information into a first time field included in a segment label corresponding to the current node.

12. The method according to claim 1, wherein the message comprises a plurality of segment labels, and each segment label corresponds to a network forwarding node on the message forwarding path; and
the encapsulation process comprises:
acquiring an entry timestamp and an exit timestamp of the message;
determining the current-node entry and exit timestamp information according to a difference between the exit timestamp and the entry timestamp; and
writing the current-node entry and exit timestamp information into a second time field included in a segment label corresponding to the current node.

13. The method according to claim 1, wherein the message comprises a plurality of segment labels, and each segment label corresponds to a network forwarding node on the message forwarding path; and
the encapsulation process comprises:
determining hop count information of a current node, and writing the hop count information of the current node into a hop count field included in a segment label corresponding to the current node.

14. The method according to claim 1, wherein the message comprises a label stack; and
the encapsulation process comprises:
acquiring a stack bottom label of the label stack;
acquiring previous-hop stay time information from a first time field included in the stack bottom label, and acquiring previous-hop entry and exit timestamp information from a second time field included in the stack bottom label;
determining the current-node stay time information according to the previous-hop stay time information and the previous-hop entry and exit timestamp information; and
replacing the previous-hop stay time information in the first time field with the current-node stay time information.

15. The method according to claim 1, wherein the message comprises a label stack; and
the encapsulation process comprises:
acquiring an entry timestamp and an exit timestamp of the message;
determining the current-node entry and exit timestamp information according to a difference between the exit timestamp and the entry timestamp; and
writing the current-node entry and exit timestamp information into a second time field included in a stack bottom label of the label stack.

16. The method according to claim 1, wherein the message comprises a label stack; and
the encapsulation process comprises:
determining hop count information of a current node, and writing the hop count information of the current node into a hop count field included in a stack bottom label of the label stack.

17. A message processing method, applied to a network control node, comprising:
determining a forwarding path of a message;
determining latency information of the message according to the forwarding path; and
distributing the latency information to a network forwarding node on the forwarding path, such that the network forwarding node encapsulates the received message according to the latency information to obtain an encapsulated message, wherein the encapsulated message comprises current-node stay time information and current-node entry and exit timestamp information.

18. The method according to claim 17, wherein the latency information comprises allowed stay time information corresponding to a plurality of network forwarding nodes; and
the distributing the latency information to a network forwarding node on the forwarding path comprises:
acquiring node labels corresponding to the plurality of network forwarding nodes to obtain a mapping relationship between the node labels and the allowed stay time information; and
sending the mapping relationship between the node labels and the allowed stay time information to the corresponding network forwarding node, such that the network forwarding node determines the current-node stay time information according to the mapping relationship between the node labels and the allowed stay time information.

19. The method according to claim 17, wherein the latency information comprises allowed stay time information corresponding to a plurality of network forwarding nodes; and
the distributing the latency information to a network forwarding node on the forwarding path comprises:
for allowed stay time information corresponding to each network forwarding node, writing the allowed stay time information into a segment label that corresponds to the network forwarding node and is included in the message; and
distributing the message to the network forwarding node on the forwarding path, such that the network forwarding node determines the current-node stay time information according to the allowed stay time information carried in the message,
wherein the message comprises a plurality of segment labels, and each segment label corresponds to a network forwarding node.

20. The method according to claim 17, wherein the latency information comprises total latency information, and the total latency information indicates a total latency value of the message on the forwarding path; and
the distributing the latency information to a network forwarding node on the forwarding path comprises:
writing the total latency information into the message; and
distributing the message to a network forwarding node on the forwarding path, such that the network forwarding node determines the current-node stay time information according to the total latency information carried in the message.

21. A network device, comprising:
a processor and a memory, wherein
the memory has program instructions stored therein, and the program instructions, when executed by the processor, cause the processor to perform the message processing method according to any one of claims 1 to 20.

22. A computer-readable storage medium, having program instructions stored therein, wherein the program instructions, when executed by a computer, implement:
the message processing method according to any one of claims 1 to 20.

23. A computer program product, having program instructions stored therein, wherein the program instructions, when executed by a computer, cause the computer to implement:
the message processing method according to any one of claims 1 to 20.
